# FASCICULE DE BREVET EUROPEEN

(11) **EP 1 355 164 B1**
(45) Date de publication et mention de la délivrance du brevet: **28.12.2011**
(21) Numéro de dépôt: 03364004.6
(22) Date de dépôt: 10.04.2003
(51) Int. Cl.: G01S 1/68

(54) **Système et procédé de localisation d'un terminal mobile, notamment pour le sauvetage d'une personne en détresse, et dispositif d'éveil d'un terminal mobile correspondant**
System und Verfahren zur Ortung eines beweglichen Endgerätes, insbesondere für die Rettung einer in Not befindlichen Person, und Vorrichtung zum Wecken eines entsprechenden beweglichen Endgerätes
System and method for locating a mobile terminal, particularly for rescuing a person in distress, and device for awaking a corresponding mobile terminal

(30) Priorité: 15.04.2002 FR 0204703
(43) Date de publication de la demande: 22.10.2003
(73) Titulaire: Société Française du Radiotéléphone-SFR, 75008 Paris (FR)
(72) Inventeur: Remy, Jean-Gabriel, 75014 Paris (FR)
(74) Mandataire: Vidon, Patrice

(56) Documents cités:
- WO-A-00/69202
- WO-A2-00/55818
- DE-A- 19 726 357
- FR-A- 2 768 282

## Description

Le domaine de l'invention est celui des systèmes de localisation des personnes.

L'invention s'applique notamment, mais non exclusivement, à la localisation de personnes en détresse, en vue de leur sauvetage dans une situation d'urgence.

Plus précisément, l'invention concerne un système de localisation d'un terminal mobile, notamment pour le sauvetage d'une personne en détresse munie dudit terminal mobile.

Il existe de nombreuses situations dans lesquelles il est nécessaire de localiser précisément des personnes. Notamment, afin d'accroître la sécurité des personnes en zones à risques, il existe un besoin clairement exprimé d'un système permettant aux équipes de sauvetage de réaliser une assistance rapide aux personnes en détresse, telles que :
- les personnes bloquées sous la neige après une avalanche ;
- les personnes inconscientes après un accident en montagne, par exemple une chute dans un ravin, une crevasse, ... ;
- les survivants à un accident d'avion en zone déserte ;
- les plaisanciers en cabotage près des côtes ;
- etc.

A ce jour, les solutions utilisées sont basées sur des systèmes de type émetteur/récepteur radio de détection, qui sont des systèmes manuels, de portée faible et employés par un important personnel à pied. Typiquement, une équipe de recherche et de sauvetage affectée à l'exploration d'une zone d'avalanche comprend de vingt à cinquante personnes qui emploient, outre les systèmes manuels précités, des perches de deux à trois mètres.

Par exemple, pour le sauvetage en montagne, on connaît les systèmes « ARVAR 9000 Avalanche Beacon » (marque déposée) et « RECCO » (marque déposée).

Ces systèmes et procédés connus présentent des inconvénients majeurs.

Tout d'abord, du fait qu'ils sont de faible portée, ils ne permettent pas d'avoir une vision d'ensemble sur une zone de recherche.

Egalement compte-tenu de leur faible portée (60 m théoriquement), ils ne peuvent pas être efficacement exploités à bord d'un hélicoptère.

Par ailleurs, ils nécessitent un investissement relativement important de la part des personnes qui souhaitent se protéger (par exemple, les montagnards qui peuvent être pris par une avalanche).

En outre, un tel investissement permet à la personne d'être localisée seulement avec un système donné parmi une multiplicité de systèmes incompatibles entre eux. Or, il paraît difficile d'exiger d'une personne qu'elle investisse dans différents équipements correspondant à différents systèmes de localisation.

La multiplicité des systèmes connus de localisation, et leur incompatibilité entre eux, posent également un problème aux entités responsables (par exemple, en France, les mairies des sites de loisirs de neige), ayant à effectuer le choix d'un système de localisation en sachant pertinemment qu'une faible partie de la population à risque pourra en bénéficier.

On connaît, à travers le document de brevet WO 00/55818 A2, une technique de repérage de personnes (des skieurs par exemple) basée sur l'utilisation d'étiquettes électroniques (aussi appelées « étiquettes d'identification par radiofréquences » ou encore « tags » en anglais), ainsi que de détecteurs d'étiquettes de différents types. Un premier type de détecteur permet de détecter les entrées des skieurs sur le domaine skiable. Un deuxième type de détecteur permet de détecter des skieurs dans une zone géographique donnée (par exemple, pour détecter des skieurs arrivant dans une zone dangereuse interdite ou encore détecter des skieurs ensevelis sous la neige après une avalanche). Cette technique ne fait qu'augmenter la multiplicité des systèmes connus de localisation, et ne permet donc pas de résoudre les problèmes précités qui découlent de cette multiplicité.

L'invention a notamment pour objectif de supprimer ou limiter significativement ces différents inconvénients de l'état de la technique.

Plus précisément, l'un des objectifs de la présente invention est de fournir un système de localisation de personnes permettant de couvrir une population beaucoup plus importante que les systèmes actuels.

L'invention a également pour objectif de fournir un tel système permettant d'effectuer une localisation de manière simple et quel que soit l'endroit où se trouve la personne à localiser.

Un autre objectif de l'invention est de fournir un tel système ne nécessitant, dans la plupart des cas, aucun investissement par les personnes qui souhaitent se protéger.

Un objectif complémentaire de l'invention est de fournir un tel système qui permette de limiter fortement le nombre de personnes formant une équipe de recherche et de sauvetage.

Ces différents objectifs, ainsi que d'autres qui apparaîtront par la suite, sont atteints selon l'invention à l'aide d'un système de localisation selon la revendication 1.

Le principe général de l'invention repose donc sur la combinaison des caractéristiques suivantes :
- pour localiser une personne, on localise un terminal mobile dont est munie cette personne ;
- on embarque à bord d'un aéronef (préférentiellement un hélicoptère) un dispositif d'éveil du terminal mobile, comprenant lui-même un répéteur coopérant avec des première et seconde antennes.
- on localise le terminal mobile grâce au(x) message(s) (typiquement un message d'accès) qu'il émet après qu'il a été éveillé.

On tire ainsi avantageusement profit du fait que les terminaux mobiles (principalement les téléphones mobiles) sont aujourd'hui très répandus. D'après les sources officielles récentes, le téléphone mobile a été diffusé dans le monde à hauteur de 450 millions d'exemplaires et en France environ 40% de la population serait déjà équipée.

Notamment, la dernière évaluation réalisée par le Peloton des Guides de haute Montagne (PGHM) de Chamonix indique que 50% des appels qu'il reçoit sont effectués par un téléphone cellulaire en limite de localisation par le réseau de radiocommunication (GSM). En montagne alpine Française, Suisse et Italienne, environ 90% des personnes emportent un téléphone mobile, par sécurité et à des fins d'usage personnel. Les faibles volume et poids de cet équipement de communication autorisent cette utilisation dans des activités de loisirs en montagne et couvertes par le réseau.

Ainsi, l'emploi du téléphone mobile dans un contexte de sauvetage assure une couverture maximale de la population présente sur les lieux (par exemple en haute montagne).

Par ailleurs, en embarquant le dispositif d'éveil à bord d'un aéronef (préférentiellement un hélicoptère), on permet une localisation rapide des personnes en détresse.

Le répéteur permet d'étendre aisément et efficacement la zone de couverture des stations de base, en créant une zone de couverture spécifique, limitée et localisée près de l'aéronef. Le fait d'utiliser un répéteur présente un réel avantage car ce dernier est facile à monter et à configurer. De plus, un répéteur est peu encombrant et peu onéreux, notamment comparé à un simulateur de station de base. Sa faible consommation permet son utilisation à bord d'un hélicoptère.

Le système selon la présente invention permet également de limiter l'intervention des équipes de recherche, ainsi que le nombre de personnes qui les composent, chargées d'effectuer la localisation finale et le dégagement des personnes (bloquées par exemple sous la neige).

Préférentiellement, ledit aéronef est un hélicoptère.

L'hélicoptère présente de multiples avantages (rapidité, maniabilité, accès à pratiquement n'importe quels lieux, ...). Il est clair cependant que la présente invention peut être mise en oeuvre avec d'autres types d'aéronef.

Avantageusement, ladite première antenne est une antenne hélice ou équivalent.

De façon avantageuse, ladite seconde antenne est une antenne très directive, dont la directivité est comprise entre 6° et 8°.

Selon une caractéristique avantageuse, ledit répéteur est un répéteur avec anti-larsen.

On rappelle maintenant brièvement le principe d'un répéteur avec anti-larsen. Ce répéteur capte sur une première antenne (A) une émission distante à faible niveau d'énergie, l'amplifie et la réémet inchangée à partir d'une seconde antenne (B). Si les première et seconde antennes (A et B) ne sont pas très bien isolées l'une de l'autre, la première antenne (A) va capter l'émission de la seconde antenne (B) et le système se boucle : plus rien ne passe. L'anti-larsen détecte que la première antenne (A) reprend l'émission de la seconde antenne (B) et un circuit spécial « efface » l'émission de la seconde antenne (B) captée par la première antenne (A).

Selon une variante avantageuse, ledit répéteur est un répéteur à transposition de fréquence.

Le principe d'un répéteur à transposition de fréquence est désormais rappelé brièvement. Pour éviter un fonctionnement bouclé « fatal » au répéteur, le répéteur à transposition de fréquence capture une émission sur une première fréquence F_{A} via une première antenne (A) et change la fréquence pour réémettre à partir d'une seconde antenne (B) sur une seconde fréquence F_{B} différente de la première fréquence F_{A}. Par conséquent, il n'y a pas de larsen.

Dans un premier mode de réalisation particulier de l'invention, lesdits moyens de localisation du terminal mobile sont du type mettant en oeuvre une technique basée sur la directivité de ladite seconde antenne.

Dans un second mode de réalisation particulier de l'invention, lesdits moyens de localisation du terminal mobile sont du type mettant en oeuvre une technique basée sur la goniométrie.

Ces premier et second modes de réalisation particuliers de l'invention peuvent être combinés.

De façon préférentielle, le système selon l'invention comprend en outre :
- des moyens d'analyse d'au moins une interface de radiocommunication, de façon à retrouver ledit moins un premier message émis par le terminal mobile ;
- des moyens de traitement dudit au moins un premier message émis par le terminal mobile et retrouvé par les moyens d'analyse d'interface, de façon à récupérer un identifiant du terminal mobile ;
- des moyens d'envoi d'au moins un second message au terminal mobile dont l'identifiant a été récupéré, pour l'obliger à émettre au moins un troisième message d'accusé de réception et/ou de réponse ;
de façon que lesdits moyens de localisation puissent localiser le terminal mobile à partir dudit au moins un premier message et dudit au moins un troisième message émis par le terminal mobile.

De cette façon, on oblige le terminal mobile à émettre plusieurs messages, ce qui facilite sa localisation, notamment en appliquant une technique de goniométrie sur les messages reçus qui proviennent du terminal mobile.

Préférentiellement, ladite au moins une interface de radiocommunication appartient au groupe comprenant :
- l'interface (Um) entre le répéteur et le terminal mobile ;
- les interfaces (A-bis) entre les stations de base (BTS) et des contrôleurs de stations de base (BSC) auxquels sont connectées les stations de base. L'invention concerne aussi un procédé de localisation selon la revendication 11.

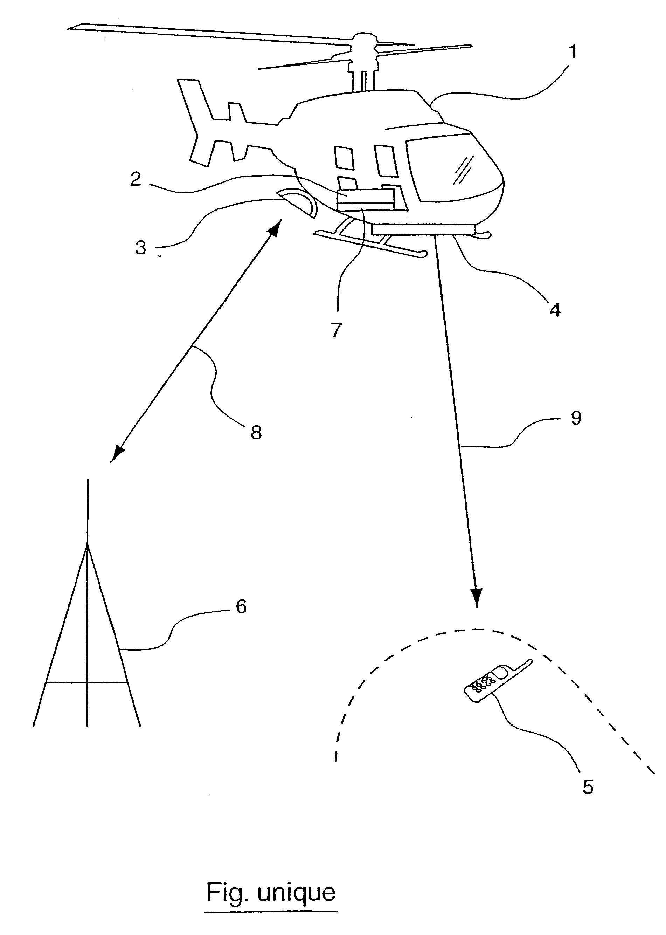

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels la figure unique présente un mode de réalisation particulier d'un système de localisation d'un terminal mobile selon l'invention.

L'invention concerne donc un système et un procédé de localisation d'un terminal mobile, notamment pour le sauvetage d'une personne en détresse munie de ce terminal mobile.

De façon classique, le terminal mobile est du type permettant de communiquer via des stations de base (BTS) d'un système de radiocommunication.

L'invention s'applique à tout type de système de radiocommunication, notamment, mais non exclusivement, selon le standard GSM (pour "Global System for Mobile communications" en anglais), DCS 1800 (pour "Digital Cellular System 1800 MHz" en anglais), PCS 1900 (pour "Personal Communication System" en anglais), DECT (pour "Digital European Cordless Telecommunications") en anglais, UMTS (pour "Universal Mobile Telecommunication System" en anglais), etc.

Dans la suite de la description, on suppose que le terminal mobile est un téléphone mobile 5. Il est clair cependant que l'invention n'est pas limitée à ce type particulier de terminal mobile.

Dans le mode de réalisation illustré sur la figure unique, le système de localisation selon l'invention comprend
- un dispositif d'éveil du téléphone mobile, transporté par un hélicoptère 1 et comprenant un répéteur 2 connecté à des première et seconde antennes 3, 4 ;
- des moyens 7 de localisation du téléphone mobile à partir d'un ou plusieurs message(s) émis par le téléphone mobile.

La première antenne 3 permet au répéteur 2 de communiquer (comme illustré par la flèche référencée 8) avec l'une des stations de bases (BTS) 6. La première antenne 3 (ou « antenne répéteur-BTS ») est de préférence une antenne hélice ou équivalent.

La seconde antenne 4 permet au répéteur 2 de créer une zone de couverture de radiocommunication spécifique, limitée et localisée près de l'hélicoptère, et de communiquer (comme illustré par la flèche référencée 9) avec le téléphone mobile si celui-ci se trouve dans la zone de couverture. Ainsi, le répéteur 2 va éveiller le téléphone mobile (par l'émission notamment d'une porteuse BCCH dans le cas d'un système GSM) et l'obliger à émettre au moins un premier message (à savoir une requête d'accès émise sur le canal RACH dans le cas d'un système GSM).

La seconde antenne 4 (ou « antenne répéteur-téléphone mobile ») est de préférence une antenne très directive, par exemple une antenne panneau verticale montée en horizontale.

En d'autres termes, le répéteur 2 assure les fonctions suivantes :
- grâce à la seconde antenne 4, il répète, avec ou sans transposition de fréquence, des signaux (notamment la porteuse BCCH dans le cas d'un système GSM) provenant d'une station de base et qu'il a reçus grâce à la première antenne 3. C'est en ce sens que le répéteur 2 crée une zone de couverture de radiocommunication spécifique, limitée et localisée près de l'hélicoptère 1 ;
- grâce à la première antenne 3, il répète vers la station de base précitée, avec ou sans transposition de fréquence, des signaux (notamment des requêtes d'accès reçues sur le canal RACH dans le cas d'un système GSM) provenant d'un téléphone mobile et qu'il a reçus grâce à la seconde antenne 4.

De préférence, on utilise un répéteur avec anti-larsen (par exemple le modèle « MIKOM » (marqué déposée)) ou un répéteur à transposition de fréquence.

On notera que le répéteur 2 peut être héliporté puisque l'hélicoptère 1 est limité à 400 W de puissance et un répéteur consomme en moyenne 100 W pour un gain de 10 W.

On utilise par exemple un répéteur large bande (ETSA) ayant les caractéristiques suivantes :
- gain et puissance de sortie moyens ;
- faible coût ;
- gain : 40 - 60 dB ;
- puissance : 10 mW ;
- bruit : environ 8 dB ;
- poids : environ 10 kg.

Dans le cas d'un système de radiocommunication selon les standards GSM et DCS 1800, on utilise par exemple un répéteur large bande 900 MHz et 1800 MHz pour traiter l'ensemble des bandes GSM et DCS.

Le répéteur peut aussi être réglé sur un canal particulier, avec ou sans transposition de fréquence.

Les moyens 7 de localisation du téléphone mobile sont par exemple du type mettant en oeuvre une technique basée sur la directivité de la seconde antenne 4 et/ou une technique basée sur la goniométrie.

On présente maintenant une première technique basée sur la directivité de la seconde antenne 4. Pour focaliser l'énergie RF sur les zones utiles, les opérateurs ont fait développer des antennes très directives dans le plan vertical, avec 6° à 8° d'ouverture à 3 dB. Ces antennes sont des « panneaux » relativement volumineux (2,5 m de longueur en 900 MHz ; 1,3 m en 1800 MHz). La technique proposée dans le cadre de la présente invention consiste à utiliser ces antennes en les montant horizontalement et non verticalement. dans ce cas, l'énergie RF est concentrée dans une tranche très limitée traçant sur le sol une ligne étroite. Avec deux passages, il est facile de croiser ces lignes et de localiser avec une grande précision la zone de recherche.

Selon une seconde technique, basée sur la goniométrie, on utilise des antennes en couronne (par exemple : huit antennes équidistantes et donc régulièrement réparties sur la circonférence d'un cercle). Un récepteur particulier permet de faire l'acquisition des énergies reçues par chacune des antennes avec le temps d'arrivée de chaque élément binaire. Le déphasage ainsi mesuré permet de donner la direction de l'émission reçue. Comme avec la première technique précitée, il faut au moins deux mesures pour pointer la zone de recherche précise.

On présente maintenant une variante du système de localisation selon l'invention, dans laquelle ce système comprend en outre :
- des moyens d'analyse d'au moins une interface de radiocommunication, de façon à retrouver le premier message précité (à savoir une requête d'accès émise sur le canal RACH dans le cas d'un système GSM) émis par le téléphone mobile ;
- des moyens de traitement de ce premier message émis par le téléphone mobile et retrouvé par les moyens d'analyse d'interface, de façon à récupérer un identifiant du téléphone mobile (par exemple son numéro IMSI) ;
- des moyens d'envoi d'un ou plusieurs - préférentiellement une rafale - second(s) message(s) (par exemple des messages courts « SMS » dans le cas d'un système GSM) au téléphone mobile dont l'identifiant a été récupéré, pour l'obliger à émettre un ou plusieurs troisième(s) message(s) d'accusé de réception et/ou de réponse (« Acknowledge Message » selon la terminologie GSM).

Ainsi, dans cette variante, les moyens 7 de localisation présentés ci-dessus peuvent localiser le téléphone mobile non seulement à partir du premier message mais également en tenant compte du ou des troisième(s) message(s) émis par le téléphone mobile.

Les moyens d'analyse précités comprennent par exemple un ou plusieurs analyseur(s) de protocole, utilisé(s) pour analyser l'interface Um, entre le répéteur 2 et le terminal mobile 5, et/ou les interfaces A-bis, entre les stations de base (BTS) 6 et les contrôleurs de stations de base (BSC) celles-ci sont connectées.

Le fonctionnement de cette variante du système de localisation selon l'invention peut être résumé ainsi :
- le dispositif d'éveil héliporté éveille le téléphone mobile 5, en émettant fort sur une aire limitée (seconde antenne 4 très directive). D'une façon générale, le système selon l'invention permet donc de créer une couverture spécifique, limitée et localisée près de l'hélicoptère, sur le lieu de l'accident. On peut distinguer les deux cas suivants : soit il n'y a pas de couverture GSM (ou autre) sur le lieu de l'accident et dans ce cas elle est créée, soit il y a déjà une couverture GSM (ou autre) et dans ce cas on oblige le téléphone mobile à se relocaliser par transposition de fréquence ;
- le téléphone mobile 5 tente de s'inscrire en lançant une requête d'accès (premier message) via le canal RACH ;
- on récupère un identifiant du téléphone mobile par capture (à l'interface A-bis ou Um) et traitement de la requête d'accès. Cette étape est par exemple mise en oeuvre par un ou plusieurs opérateurs, à qui on demande d'identifier la ou les station(s) de base couvrant la zone de l'accident (par exemple une zone de montagne) et d'observer les interfaces (par exemple A-bis) en utilisant des analyseurs de protocole (sondes) ;
- on envoie des rafales de messages courts (SMS) (seconds messages) pour obliger le téléphone mobile à émettre des messages d'accusé de réception (troisièmes messages). Ces messages courts peuvent être lancés par tous moyens connus (via Internet, des mobiles modifiés, le service GPRS, ...) ;
- la localisation (mettant en oeuvre une technique basée sur la directivité de la seconde antenne et/ou sur la goniométrie) se fait après envoi par le téléphone mobile de plusieurs (premier et troisièmes) messages.

Dans une autre variante du système de localisation selon l'invention, le répéteur 2 est remplacé par un « mini-réseau de radiocommunication », par exemple selon le modèle « INTERWAVE » (marque déposée).

On rappelle qu'un « mini-réseau de radiocommunication » est un dispositif intégrant dans un volume restreint les fonctions de différents éléments d'une infrastructure de radiocommunication. Par exemple, dans le cas du GSM, il intègre les fonctions des éléments suivants :
- HLR (« Home Location Register », enregistreur de localisation nominal),
- VLR (Visitor Location Register », enregistreur de localisation des visiteurs),
- MSC (« Mobile Services Switching Center », commutateur du service mobile),
- BSC (« Base Station Controller », Contrôleur de stations de base),
- BTS (« Base Transceiver Station », station de base).

Ainsi, le « rack » du mini-réseau est un PLMN à lui tout seul. Il peut accepter des mobiles en « roaming » (itinérance) et en particulier leurs tentatives qui seront utilisées pour la localisation.

## Revendications

1. Système de localisation d'un terminal mobile (5) pour le sauvetage d'une personne en détresse munie dudit terminal mobile, le terminal mobile étant du type permettant de communiquer via des stations de base (6) d'au moins un système de radiocommunication,
ledit système de localisation comprenant :
- au moins un dispositif d'éveil du terminal mobile comprenant un répéteur (2) connecté à des première et seconde antennes (3, 4), ladite première antenne permettant au répéteur de communiquer avec l'une des stations de bases zone de couverture de radiocommunication spécifique, et de communiquer avec le terminal mobile si celui-ci se trouve dans la zone de couverture, de façon à éveiller le terminal mobile et l'obliger à émettre au moins un premier message ;
- des moyens (7) de localisation du terminal mobile à partir dudit au moins un premier message émis par le terminal mobile ;
**caractérisé en ce que**
ledit dispositif d'éveil du terminal mobile est transporté par un aéronef (1) ;
ladite seconde antenne permet au répéteur de créer une zone de couverture de radio communication spécifique, limitée et localisée près de l'aéronef ;
ledit terminal mobile appartient au groupe constitué:
- de téléphones mobiles ;
- d'assistants personnels numériques.

2. Système selon la revendication 1, **caractérisé en ce que** ledit aéronef (1) est un hélicoptère.

3. Système selon l'une quelconque des revendications 1 et 2, **caractérisé en ce que** ladite première antenne (3) est une antenne hélice.

4. Système selon l'une quelconque des revendications 1 à 3, **caractérisé en ce que** ladite seconde antenne (4) est une antenne très directive, dont la directivité est comprise entre 6° et 8°.

5. Système selon l'une quelconque des revendications 1 à 4, **caractérisé en ce que** ledit répéteur (2) est un répéteur avec anti-larsen.

6. Système selon l'une quelconque des revendications 1 à 4, **caractérisé en ce que** ledit répéteur (2) est un répéteur à transposition de fréquence.

7. Système selon l'une quelconque des revendications 1 à 6, **caractérisé en ce que** lesdits moyens (7) de localisation du terminal mobile sont du type mettant en oeuvre une technique basée sur la directivité de ladite seconde antenne.

8. Système selon l'une quelconque des revendications 1 à 6, **caractérisé en ce que** lesdits moyens de localisation du terminal mobile sont du type mettant en oeuvre une technique basée sur la goniométrie.

9. Système selon l'une quelconque des revendications 1 à 8, **caractérisé en ce qu'**il comprend en outre :
- des moyens d'analyse d'au moins une interface de radiocommunication, de façon à retrouver ledit moins un premier message émis par le terminal mobile ;
- des moyens de traitement dudit au moins un premier message émis par le terminal mobile et retrouvé par les moyens d'analyse d'interface, de façon à récupérer un identifiant du terminal mobile ;
- des moyens d'envoi d'au moins un second message au terminal mobile dont l'identifiant a été récupéré, pour l'obliger à émettre au moins un troisième message d'accusé de réception et/ou de réponse ;
de façon que lesdits moyens de localisation puissent localiser le terminal mobile à partir dudit au moins un premier message et dudit au moins un troisième message émis par le terminal mobile.

10. Système selon la revendication 9, **caractérisé en ce que** ladite au moins une interface de radiocommunication appartient au groupe comprenant :
- l'interface Um entre le répéteur et le terminal mobile ;
- les interfaces A-bis entre les stations de base et des contrôleurs de stations de base auxquels sont connectées les stations de base.

11. Procédé de localisation d'un terminal mobile (5) pour le sauvetage d'une personne en détresse munie dudit terminal mobile, le terminal mobile étant du type permettant de communiquer via des stations de base (6) d'au moins un système de radiocommunication,
ledit procédé comprenant les étapes suivantes :
- on déplace sur un lieu de recherche du terminal mobile au moins un dispositif d'éveil du terminal mobile, ledit dispositif d'éveil comprenant un répéteur (2) connecté à des première et seconde antennes (3, 4), ladite première antenne permettant au répéteur de communiquer avec l'une des stations de bases ;
- ledit au moins un dispositif d'éveil émet un signal prédéterminé, de façon à éveiller le terminal mobile si celui-ci se trouve dans la zone de couverture, et l'obliger à émettre au moins un premier message ;
- on localise le terminal mobile à partir dudit au moins un premier message qu'il a émis,
**caractérisé en ce que**
l'au moins dispositif d'éveil du terminal mobile est transporté par un aéronef (1) déplacé sur le lieu de recherche du terminal mobile ;
ladite seconde antenne permet au répéteur de créer une zone de couverture de radiocommunication spécifique, limitée et localisée près de l'aéronef ;
ledit terminal mobile appartient au groupe constitué:
- de téléphones mobiles ;
- d'assistants personnels numériques.

## Claims

1. A system for locating a mobile terminal (5) for rescuing a person in distress equipped with the said mobile terminal, the mobile terminal being of a type able to communicate via base stations (6) of at least one radio-communication system,
the said location system comprising:
- at least a device for alerting the mobile terminal comprising a repeater (2) connected to the first and second antennae (3,4), the said first antenna enabling the repeater to communicate with one of the base stations, and to communicate with the mobile terminal, if the latter is located in the coverage zone, in such a way as to alert the mobile terminal and to force it to transmit at least a first message;
- mean (7) for locating the mobile terminal based on the said at least one first message transmitted by the mobile terminal;
**characterised in that** the said device for alerting the mobile terminal is transported by an aircraft (1);
the said second antenna enables the repeater to create a specific, limited radio-communication coverage zone, located close to the aircraft,
and the said mobile terminal belongs to the group constituted by:
- mobile phones;
- personal digital assistants.

2. A system according to claim 1, **characterised in that** the said aircraft is a helicopter.

3. A system according to any of the claims 1 and 2, **characterised in that** the said first antenna (3) is a helical antenna.

4. A system according to any of the claims 1 to 3, **characterised in that** the said second antenna (4) is a highly directional antenna, whose degree of directivity is between 6° and 8°.

5. A system according to any of the claims 1 to 4, **characterised in that** the said repeater (2) is a repeater fitted with an anti-larsen device.

6. A system according to any of the claims 1 to 4, **characterised in that** the said repeater (2) is a repeater with frequency translation.

7. A system according to any of the claims 1 to 6, **characterised in that** the said mean (7) for locating the mobile terminal is of a type using a technique based on the directivity of the said second antenna.

8. A system according to any of claims 1 to 6, **characterised in that** the said mean for locating the mobile terminal is of a type using a technique based on goniometry.

9. A system according to any of the claims 1 to 8, **characterised in that** it also comprises:
- mean for analysing at least one radio-communication interface, in such a way as to retrieve the said first message transmitted by the mobile terminal;
- mean for processing the said first message transmitted by the mobile terminal and retrieved by the mean for analysing the interface, in such a way as to recover an ID from the mobile terminal;
- mean for sending at least a second message to the mobile terminal whose ID has been recovered, to force it to transmit at least a third message acknowledging receipt and/or answering;
in such a way that the said location mean can locate the mobile terminal from the said first message and from the said third message transmitted by the mobile terminal.

10. A system according to claim 9, **characterised in that** at least one said radio-communication interface belongs to the group comprising :
- the interface Um between the repeater and the mobile terminal;
- the interfaces A-b between the base stations and the base station controllers to which the base stations are connected.

11. A method for locating a mobile terminal (5) for rescuing a person in distress equipped with the said mobile terminal, the mobile terminal being of a type able to communicate via base stations (6) of at least one radio-communication system,
the said method comprising the following steps:
- at least a device for alerting a mobile terminal is flown over a search area for the mobile terminal, the said alerting device comprising a repeater (2) connected to a first and second antenna (3, 4), the said first antenna enabling the repeater to communicate with one of the base stations,
- the said alerting device transmits a predetermined signal, in such a way as to alert the mobile terminal if it is located in the coverage zone, forcing it transmit at least a first message;
- the mobile terminal is located using the said first message that it has transmitted;
**characterised in that** the said device for alerting the mobile terminal is transported by an aircraft (1) flown over the search area for the mobile terminal ;
the said second antenna enables the repeater to create a specific, limited radio-communication coverage zone located close to the aircraft;
and the said mobile terminal belongs to the group constituted by:
- mobile phones;
- personal digital assistants.

## Patentansprüche

1. System zur Ortung eines beweglichen Endgeräts (5) zur Rettung einer in Not befindlichen Person, die das bewegliche Endgerät bei sich hat, wobei das bewegliche Endgerät vom Typ ist, der das Kommunizieren über Basistationen (6) von mindestens einem Funkverbindungssystem ermöglicht,
wobei das Ortungssystem Folgendes umfasst:
- mindestens eine Vorrichtung zum Wecken des beweglichen Endgeräts, die einen Verstärker (2) umfasst, der mit einer ersten und einer zweiten Antenne (3, 4) verbunden ist, wobei die erste Antenne dem Verstärker das Kommunizieren mit einer der Basisstationen eines spezifischen Funkverbindungsabdeckungsbereichs und das Kommunizieren mit dem beweglichen Endgerät ermöglicht, wenn dieses sich im Abdeckungsbereich befindet, derart, dass das bewegliche Endgerät geweckt wird und gezwungen wird, mindestens eine erste Nachricht zu senden;
- Mittel (7) zur Ortung des beweglichen Endgeräts ausgehend von der mindestens einen durch das bewegliche Endgerät gesendeten ersten Nachricht;
**dadurch gekennzeichnet, dass** die Vorrichtung zum Wecken des beweglichen Endgeräts durch ein Luftfahrzeug (1) transportiert wird;
wobei die zweite Antenne es dem Verstärker ermöglicht, einen spezifischen Funkverbindungsabdeckungsbereich zu schaffen, der in der Nähe des Luftfahrzeugs begrenzt ist und geortet wird;
wobei das bewegliche Endgerät zur Gruppe gehört, die aus Folgendem gebildet ist:
- Mobiltelefonen;
- persönlichen digitalen Assistenten.

2. System nach Anspruch 1, **dadurch gekennzeichnet, dass** das Luftfahrzeug (1) ein Hubschrauber ist.

3. System nach einem der Ansprüche 1 und 2, **dadurch gekennzeichnet, dass** die erste Antenne (3) eine Wendelantenne ist.

4. System nach einem der Ansprüche 1 bis 3, **dadurch gekennzeichnet, dass** die zweite Antenne (4) eine Antenne mit großer Richtwirkung ist, deren Richtwirkung zwischen 6° und 8° enthalten ist.

5. System nach einem der Ansprüche 1 bis 4, **dadurch gekennzeichnet, dass** der Verstärker (2) ein Anti-Larsen-Verstärker ist.

6. System nach einem der Ansprüche 1 bis 4, **dadurch gekennzeichnet, dass** der Verstärker (2) ein Frequenzumsetzungsverstärker ist.

7. System nach einem der Ansprüche 1 bis 6, **dadurch gekennzeichnet, dass** die Mittel (7) zur Ortung des beweglichen Endgeräts von dem Typ sind, der eine Technik einsetzt, die auf der Richtwirkung der zweiten Antenne gründet.

8. System nach einem der Ansprüche 1 bis 6, **dadurch gekennzeichnet, dass** die Mittel zur Ortung des beweglichen Endgeräts von dem Typ sind, der eine Technik einsetzt, die auf der Peilung gründet.

9. System nach einem der Ansprüche 1 bis 8, **dadurch gekennzeichnet, dass** es ferner Folgendes umfasst:
- Mittel zur Analyse mindestens einer Funkverbindungsschnittstelle, derart, dass die mindestens eine erste, durch das bewegliche Endgerät gesendete Nachricht wiederaufgefunden wird;
- Mittel zur Verarbeitung der mindestens einen ersten, durch das bewegliche Endgerät gesendeten und durch die Schnittstellenanalysemittel wiederaufgefundenen Nachricht, derart, dass eine Kennung des beweglichen Endgeräts wiedergewonnen wird;
- Mittel zum Versand mindestens einer zweiten Nachricht an das bewegliche Endgerät, dessen Kennung wiedergewonnen wurde, um es zu zwingen, mindestens eine dritte Empfangsbestätigungs-und/oder Antwortnachricht zu senden;
derart, dass die Ortungsmittel das bewegliche Endgerät ausgehend von der mindestens einen ersten Nachricht und der mindestens einen dritten, durch das bewegliche Endgerät gesendeten Nachricht orten kann.

10. System nach Anspruch 9, **dadurch gekennzeichnet, dass** die mindestens eine Funkverbindungsschnittstelle zur Gruppe gehört, die Folgendes umfasst:
- die Schnittstelle Um zwischen dem Verstärker und dem beweglichen Endgerät;
- die Schnittstellen A-bis zwischen den Basisstationen und Basistations-Steuereinheiten, mit denen die Basisstationen verbunden sind.

11. Verfahren zur Ortung eines beweglichen Endgeräts (5) zur Rettung einer in Not befindlichen Person, die das bewegliche Endgerät bei sich hat, wobei das bewegliche Endgerät von dem Typ ist, der das Kommunizieren über Basisstationen (6) von mindestens einem Funkverbindungssystem ermöglicht,
wobei das Verfahren die folgenden Schritte umfasst:
- Bewegen mindestens einer Vorrichtung zum Wecken des beweglichen Endgeräts an einen Ort, an dem das bewegliche Endgerät gesucht wird, wobei die Weckvorrichtung einen Verstärker (2) umfasst, der mit einer ersten und einer zweiten Antenne (3, 4) verbunden ist, wobei die erste Antenne es dem Verstärker ermöglicht, mit einer der Basisstationen zu kommunizieren;
- wobei die mindestens eine Weckvorrichtung ein Vorbestimmtes Signal sendet, derart, dass das bewegliche Endgerät, wenn es sich im Abdeckungsbereich befindet, geweckt und gezwungen wird, mindestens eine erste Nachricht zu senden;
- Orten des beweglichen Endgeräts ausgehend von der mindestens einen Nachricht, die es gesendet hat,
**dadurch gekennzeichnet, dass** die mindestens eine Vorrichtung zum Wecken des beweglichen Endgeräts durch ein Luftfahrzeug (1) transportiert wird, das an den Ort bewegt wird, an dem das bewegliche Endgerät gesucht wird;
wobei die zweite Antenne es dem Verstärker ermöglicht, einen spezifischen Funkverbindungsabdeckungsbereich zu schaffen, der in der Nähe des Luftfahrzeugs begrenzt ist und geortet wird;
wobei das bewegliche Endgerät zur Gruppe gehört, die aus Folgendem gebildet ist:
- Mobiltelefonen;
- digitalen persönlichen Assistenten.
